# EUROPÄISCHE PATENTANMELDUNG

(11) **EP 3 795 509 A1**
(43) Veröffentlichungstag der Anmeldung: **24.03.2021**
(21) Anmeldenummer: 19198672.8
(22) Anmeldetag: 20.09.2019
(51) Int. Cl.: B65G 53/56, B08B 3/02, B08B 9/032, F16K 11/072, B65G 45/22

(54) **MATERIALWEICHE UND TRENNVORRICHTUNG**

(71) Anmelder: Sesotec GmbH, 94513 Schönberg (DE)
(72) Erfinder: HILLER, Michael, 94513 Schönberg (DE); ERTL, Stefan, 94513 Schönberg (DE)
(74) Vertreter: Glück Kritzenberger Patentanwälte PartGmbB

(57) **Zusammenfassung**

Die Erfindung betrifft eine Materialweiche (18) zum Separieren von Schüttgut, mit einem Gehäuse (20), welches einen Einlass (22) und wenigstens zwei Auslässen (24, 26) als auch wenigstens ein zwischen dem Einlass (22) und den Auslässen (24, 26) mittels eines Schwenklagers (30, 32, 36a, 36b) schwenkbar angeordnetes Leitelement (34) aufweist, um den Materialstrom wahlweise einem der Auslässe (24, 26) zuzuführen. Die Materialweiche (18) hat einen Schwenkantrieb (42) zum Schwenken des Leitelements (34), um dieses fluchtend zwischen dem Einlass (22) und jeweils einem der mehreren Auslässe (24, 26) auszurichten. Erfindungsgemäß ist in dem Gehäuse (20) zwischen dem Leitelement (34) und der Gehäuseinnenwand (38) wenigstens ein Reinigungselement (44) einer Wascheinrichtung (43) angeordnet. Auf diese Weise kann die Materialweiche effektiv bei geschlossenem Gehäuse gereinigt werden.

## Beschreibung

Die vorliegende Erfindung betrifft eine Materialweiche zum Separieren von Schüttgut. Die Materialweiche hat Einlass und wenigstens zwei Auslässe als auch wenigstens ein zwischen dem Einlass und den Auslässen mittels eines Schwenklagers schwenkbar angeordnetes Leitelement, um den Materialstrom wahlweise einem der Auslässe zuzuführen. Die Materialweiche hat ein Gehäuse und einen Schwenkantrieb zum Schwenken des Leitelements, um dieses fluchtend mit jeweils einem der mehreren Auslässen auszurichten. Eine derartige Materialweiche wird insbesondere in Materialtrennanlagen, zum Beispiel im Lebensmittel oder Recyclingbereich, eingesetzt, um unerwünschte Produkte, wie zum Beispiel Metallteile, aus einem Materialstrom auszusondern. Eine derartige Materialweiche wird auch eingesetzt, um Schüttgüter aller Art zu trennen.

Ein Problem dieser bekannten Materialweiche besteht darin, dass das Leitelement, welches oft durch ein Leitrohr gebildet ist, leicht verschmutzt und die Reinigung aufwendig ist.

Es ist daher Aufgabe der Erfindung, eine Materialweiche der oben genannten Art zu schaffen, die leicht zu reinigen ist. Die Aufgabe wird erfindungsgemäß durch eine Materialweiche mit den Merkmalen des Anspruchs 1 gelöst. Vorteilhafte Weiterbildungen der Erfindung sind Gegenstand der abhängigen Ansprüche. Vorteilhafte Weiterbildungen der Erfindung sind ebenfalls in der Beschreibung und in den Zeichnungen beschrieben.

Die Aufgabe wird bei einer Materialweiche der vorstehend genannten Art dadurch gelöst, dass in dem Gehäuse der Materialweiche zwischen dem Leitelement und der Gehäuseinnenwand wenigstens ein Reinigungselement einer Wascheinrichtung angeordnet ist. Auf diese Weise lässt sich das Gehäuse jederzeit manuell oder sogar automatisch reinigen.

Schüttgüter unterschiedlicher Art, z.B. unterschiedlicher Zusammensetzung/Farbe etc. werden oft in derselben Anlage produziert. Bei einem Produktwechsel müssen die Rohrleitung und alle anderen Anlagenteile z.B. Behälter, Mischer und natürlich auch Materialweichen gründlich gereinigt werden, um eine Verschleppung auf die neue Schüttgutsorte zu verhindern. Die erfindungsgemäße Materialweiche erlaubt einen einfachen Produktwechsel, in dessen Verlauf die Materialweiche natürlich gründlich gereinigt werden muss. Besonders wichtig ist dies im Lebensmittelbereich, insbesondere mit Blick auf die Hygienevorschriften, aber auch im Kunststoffbereich z.B. bei einem Farbwechsel zwischen den Batches. Vorzugsweise ist die Materialweiche nach den Prinzipien eines hygienischen Designs ausgeführt und somit leicht reinigbar.

Die Erfindung erlaubt es, dass bei der Anlagenreinigung die Materialweiche nicht geöffnet werden muss. Diese wird vorzugsweise "auf Knopfdruck" zusammen mit dem Rest der Anlage gereinigt, was einen wesentlich geringeren Zeit- und Personalaufwand bedeutet. Dies führt zu kürzeren Reinigungsintervallen und mehr Produktionszeit, ist also insgesamt ökonomischer.

Vorzugsweise ist das wenigstens eine Reinigungselement durch wenigstens eine Sprühdüsen gebildet, die mit einer Druckwasserquelle und/oder einer Heißwasserquelle verbindbar sind. Sprühdüsen sind in der Lage, bei Verbindung mit einer Druckwasser und/oder Heißdampfquelle eine hohe Reinigungswirkung zu erzielen. Zudem können zwischenzeitlich Waschdetergenzien über die Sprühdüsen in das Gehäuse der Materialweiche eingeleitet werden, so dass die Innenwände erst mit einem Reinigungsmittel behandelt und anschließend mit Druckwasser oder Dampf gründlich gereinigt werden können

Vorzugsweise werden die Sprühdüsen auch nach der Nassreinigung zum Trocknen mittels Heißluft eingesetzt. Auf diese Weise wird der gesamte Reinigungsvorgang inklusive Trocknen schneller abgeschlossen und es ist keine separate Trocknungsvorrichtung notwendig.

Selbstverständlich können in dem Innenraum des Gehäuses mehrere unabhängig voneinander betreibbare Wascheinrichtungen oder unabhängig betreibbare Teile, z.B. Sprühdüsen einer Wascheinrichtung angeordnet sein, um eine differenzierte Reinigung unterschiedlicher und eventuell auch unterschiedlich verschmutzter Gehäusebereich zu ermöglichen. So ist z.B. an den Auslässen an der Gehäuseunterseite und eventuell auch am Einlass mit einer höheren Verschmutzung zu rechnen als in den Seitenbereichen.

Vorzugsweise sind die Sprühdüsen in den Innenecken des Gehäuses angeordnet. Auf diese Weise sind sie am besten geeignet, alle Innenwände der Materialweiche gut zu erreichen.

In einer vorteilhaften Weiterbildung der Erfindung ist in dem Gehäuse ein Verschmutzungssensor angeordnet. Dieser kann nach Erreichen eines vorgegebenen Verschmutzungsgrads ein Warnsignal erzeugen, um sie nach der Benutzung einem Reinigungsprozess unterziehen zu können. In der Regel wird die Materialweiche während der Reinigung der Materialweiche nicht benutzt und auch kein Reinigungsvorgang während der Benutzung ausgelöst!

Vorzugsweise weist das Gehäuse eine Tür auf, die an dem Gehäuse bewegbar oder abnehmbar gehalten ist. Auf diese Weise ist der Innenraum des Gehäuses leicht zugänglich, eventuell für Vorgänge in Zusammenhang mit einer Innenreinigung der Materialweiche.

Vorzugsweise ist das Leitelement abnehmbar in dem Gehäuse aufgenommen. Dies erlaubt eine Innenreinigung des Gehäuses der Materialweiche bei abgenommenen Leitelement, was eine gründlichere Reinigung des Gehäuseinnenraums ermöglicht.

Vorzugsweise ist die Steuerung konzipiert, das Leitelement während der Reinigung hin- und her zu schwenken. Dies erlaubt eine wesentlich gründlichere Reinigung, da nicht bestimmte Bereiche des Innenraums durch das Leitelement dauerhaft abgedeckt sind.

Vorzugsweise ist hierzu ein erstes Lagerelement des Schwenklagers des Leitelements an dem Gehäuse angeordnet ist und ein zweites Lagerelement des Schwenklagers an der Tür. Auf diese Weise kann bereits mit dem Öffnen der Tür das Leitelement vom Schwenklager gelöst werden.

In einer vorteilhaften Weiterbildung der Erfindung sind die gehäuse- und türseitigen ersten und zweiten Lagerelemente durch Lagerbuchsen gebildet und am Leitelement sind Wellenzapfen ausgebildet sind, welche sich in die beide Lagerbuchsen hinein erstrecken. Auf diese Weise wird eine Lagerung gebildet, die durch die Betätigung der Wascheinrichtung nicht beeinträchtigt wird.

In einer vorteilhaften Weiterbildung der Erfindung bestehen das Gehäuse und/oder die Tür aus korrosionsbeständigen Materialien oder sind damit beschichtet. Sie sind damit unempfindlich gegen die im Innenraum verwendeten aggressiven Waschdetergenzien und oder Druckwasser und/oder Heißdampf.

Vorzugsweise ist der Schwenkantrieb für das Leitelement außenseitig mit dem Gehäuse der Materialweiche verbunden ist. Auf diese Weise ist er dem Wirkungsbereich der Wascheinrichtung entzogen. Es können daher im Gehäuseinnenraum stark wirkende aggressive Detergenzien , hohe Wasserdrücke und ein überhitzter Dampf verwendet werden.

Die Erfindung betrifft auch eine Trennvorrichtung für Schüttgüter, umfassend eine Materialzufuhr, eine Förderstrecke für Schüttgüter, welche Trennvorrichtung eine Detektionseinrichtung und eine Steuerung aufweist, um wenigstens zwei in dem Schüttgut enthaltene Materialsorten zu trennen. Die Steuerung ist konzipiert, in Abhängigkeit von einem Signal der Detektionseinrichtung den Schwenkantrieb einer Materialweiche der oben genannten Art zu betätigen, um mittels der Betätigung des Leitelements ein Materialteil von einem Einlass der Materialweiche in einen von mehreren Auslässen der Materialweiche zu leiten.

Des Weiteren enthält die Trennvorrichtung eine Wascheinrichtung, welche wenigstens ein Reinigungselement im Innenraum des Gehäuses der Materialweiche aufweist. Die Wascheinrichtung ist konzipiert, einen manuell oder seitens der Steuerung gesteuerten Reinigungsvorgang im Gehäuse durch Betätigung des Reinigungselements in Gang zu setzen/durchzuführen. Hinsichtlich der Vorteile dieser Trennvorrichtung wird auf die oben beschriebene Materialweiche verwiesen.

Vorzugsweise ist die Steuerung mit einem Verschmutzungssensor im Gehäuse der Materialweiche verbunden, und die Steuerung ist konzipiert, das Signal des Verschmutzungssensors mit einem Referenzwert zu vergleichen und in Abhängigkeit vom Vergleichsergebnis ein Wartungssignal an die Steuerung und/oder an eine Bedienperson abzugeben, um nach Beendigung der Benutzung der Materialweiche einen Reinigungsvorgang initiieren zu können. Das Signal für die Bedienperson kann ein optisches oder akustisches Signal sein, das durch die Steuerung abgegeben wird. Vorzugsweise enthält die Wascheinrichtung ein mit der Steuerung der Trennvorrichtung verbundenes Waschmodul, welches Eingänge für eine Wasserhochdruckquelle, für Wasserdampf und für Waschdetergenzien aufweist als auch eine Zuleitung zum Reinigungselement, vorzugsweise den Sprühdüsen. Das Waschmodul kann auch über einen Eingang für Heißluft verfügen, so dass am Ende der Reinigung auch ein Trocknungsvorgang über die Reinigungselemente, insbesondere Sprühdüsen erfolgen kann. Das Waschmodul hat vorzugsweise einen eigenen Prozessor und ist über eine Signalleitung mit einem Verschmutzungssensor verbunden, der im Innenraum des Gehäuses der Materialweiche angeordnet ist. Das Waschmodul ist vorzugsweise über eine Steuerleitung mit der Steuerung verbunden. Die Steuerung kann dem Waschmodul der Wascheinrichtung zum Beispiel aufgrund manueller Anweisung z.B. über ein steuerungsseitiges Bedienpanel ein Signal zum Starten eines Reinigungszyklus übermitteln, worauf das Waschmodul einen Reinigungsvorgang startet.

Vorzugsweise ist die Steuerung konzipiert, die Parameter des Waschvorgangs in Abhängigkeit von dem Vergleichsergebnis einzustellen, z.B.: die Dauer, Temperatur, Detergenzienzugabe etc.. Auf diese Weise kann der Waschvorgang dem Verschmutzungsgrad des Gehäuseinnenraums angepasst werden.

Es ist für den Fachmann offensichtlich, dass die oben beschriebenen Ausführungsformen der Erfindung in beliebiger Weise miteinander kombinierbar sind.

Folgende Ausdrücke werden synonym verwendet: Wellenzapfen - Lagerzapfen; Trennvorrichtung - Metallabscheider; Leitelement - Leitrohr; Waschvorrichtung- Wascheinrichtung- Reinigungsvorrichtung - Reinigungseinrichtung; Reinigungselement - Sprühdüse;

Die Erfindung wird nachfolgend beispielsweise anhand der schematischen Zeichnung beschrieben. In dieser zeigen:
- Fig. 1: eine perspektivische Ansicht einer Trennvorrichtung mit geöffneter Türe des Gehäuses der Materialweiche,
- Fig. 2a: einen seitlichen Längsschnitt durch die Trennvorrichtung gemäß Fig. 1A und
- Fig. 2b: einen Längsschnitt durch die Trennvorrichtung gemäß der Linie A-A aus Fig. 2A.

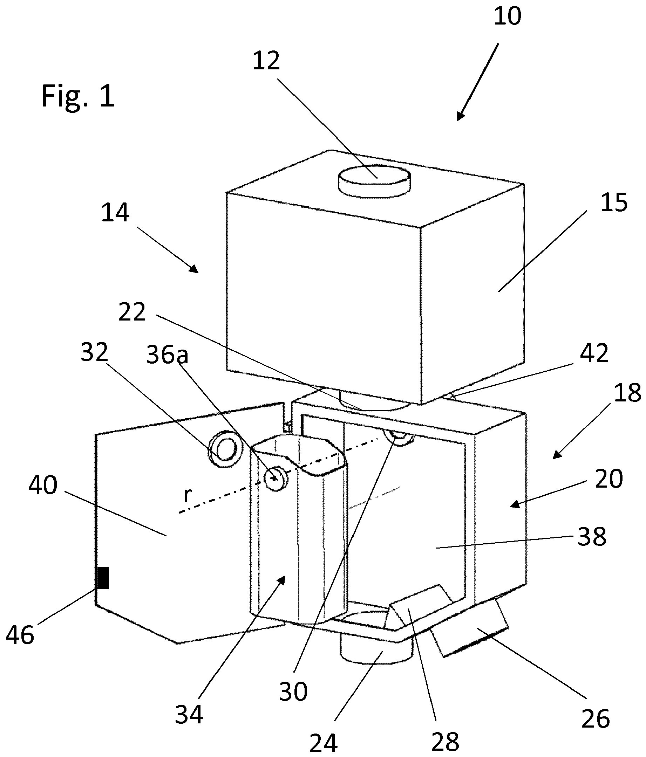

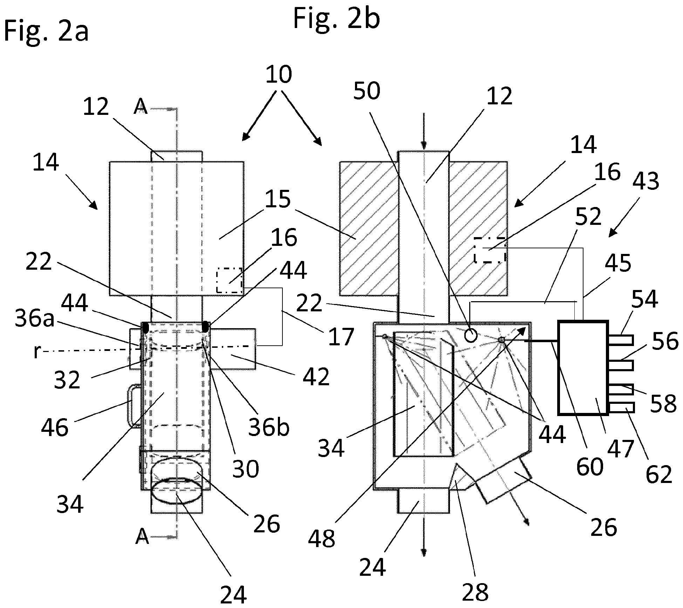

Fig. 1 zeigt in Verbindung mit den Figuren 2a und 2b eine Trennvorrichtung 10, welche als Förderstrecke ein Fallrohr 12 aufweist, das von einer Detektionseinrichtung 14 verbunden ist. Die Trennvorrichtung 10 hat eine Steuerung 16, die in dem Gehäuse 15 der Detektionseinrichtung 14 integriert sein kann. Am unteren Ende des Fallrohrs 12 ist eine Materialweiche 18 mit einem quaderförmigen Gehäuse 20 angeordnet. Das untere Ende des Fallrohres 12 bildet somit den Einlass 22 in dem Gehäuse 20 der Materialweiche 18. Das Gehäuse 20 hat an seiner Unterseite zwei rohrförmige in einem Winkel zueinander angeordnete Auslässe 24, 26, die durch eine spitz zulaufende Trennrippe 28 voneinander getrennt sind. Die Neigung der Auslässe 24, 26 entspricht der wechselseitigen Neigung zweier entsprechender Tangenten auf einer Kreisbahn um die Schwenkachse r des Leitrohres 34 im Ort der beiden Zentren der Auslässe 24, 26.

In dem Gehäuse 20 ist mittels zweier Lagerbuchsen 30, 32 ein Leitrohr 34 schwenkbar gelagert, welches mit seinen an einander beabstandeten Außenwänden des Leitrohres 14 angebrachten Lagerzapfen 36a,b in die beiden Lagerbuchsen 30, 32 im Gehäuse 20 und in der Tür 40 eingreift. In der Rückwand 38 des Gehäuses ist die erste Lagerbuchse 30 angeordnet. An diese Rückwand 38 ist außenseitig ein Schwenkantrieb 42 montiert, welcher durch entsprechende Eingriffsprofile mit dem zugeordneten Lagerzapfen 36a,b des Leitrohres 34 in einen funktionsmäßigen Eingriff tritt, um das Leitrohr 34 um die Schwenkachse r derart zu rotieren, dass es entweder mit dem ersten Auslass 24 oder mit dem zweiten Auslass 26 fluchtet. Durch die Tatsache, dass die beiden Lagerzapfen 36a,b des Leitrohres 34 an seinem oberen Ende angeordnet sind, bleibt der Einlass des Leitrohres 34 fluchtend mit dem Einlass 22 der Materialweiche 18 unabhängig davon, ob das untere Ende des Leitrohres 34 mit dem ersten Auslass 24 oder dem zweiten Auslass 26 fluchtet. Durch die Trennrippe 28 wird dafür gesorgt, dass der Innenraum des Gehäuses 20 der Materialweiche 18 nicht mit dem Material verschmutzt wird, welcher sich zwischen den beiden Auslässen 24, 26 absetzen könnte, da der zwischen dem Einlass 22 und den beiden Auslässen 24, 26 durch das Leitrohr 34 fließende Materialstrom in der Regel beim Umschalten von einen auf den anderen Auslass 24, 26 nicht unterbrochen wird.

Das Gehäuse 20 hat an seiner Vorderseite eine Türe 40, in welcher die zweite Lagerbuchse 32 für die Schwenklagerung des Leitrohres 34 angeordnet ist. Außenseitig ist an der Tür 40 ein Greifbügel 46 (Fig. 2a) angeordnet, um die Tür 40 einfach öffnen und schließen zu können. Zum Reinigen wird die Türe 40 in die dargestellte Öffnungsstellung aufgeschwenkt. Hierbei löst sich die zweite Lagerbuchse 32 an der Tür 40 von dem ersten Lagerzapfen 36a,b so dass das Leitrohr 34 nur mit seinem zweiten Lagerzapfen 36b in der ersten Lagerbuchse 30 an der Rückwand 38 des Gehäuses 20 der Materialweiche 18 gehalten ist. Das Leitrohr 34 kann nun einfach nach vorne entnommen werden, was es ermöglicht, sowohl das Leitrohr per se als auch den Innenraum des Gehäuses 20 der Materialweiche zu reinigen und/oder zu warten. Auf der anderen Seite ist hierdurch leicht ein Austausch des Leitrohres 34 möglich. Durch die Verwendung eines Leitrohres 34 mit einem im Wesentlichen quadratischen Querschnitt kann der angrenzende Bereiche zwischen den beiden Auslässen 24, 26, wo die Trennrippe 28 angeordnet ist, sehr dünn und stegartig gehalten werden, so dass sich dort beim Umschwenken des Leitrohres 34 keine großen Materialansammlungen in dem Innenraum des Gehäuses 20 festsetzen können.

Fig. 2b zeigt die Anordnung von Sprühdüsen 44 als Reinigungselemente einer Wascheinrichtung 43 in den Innenecken 48 des Innenraums des Gehäuses 20, um diesen zwischen dem Leitrohr 34 und den Innenwänden des Gehäuses 20 zu reinigen. Hierfür enthält die Wascheinrichtung 43 ein mit der Steuerung 16 verbundenes Waschmodul 47, welches einen ersten Eingang 54 für eine Wasserhochdruckquelle, einen zweiten Eingang 56 für Wasserdampf, einen dritten Eingang 58 für Waschdetergenzien und einen vierten Eingang 62 für Heißluft aufweist. Das Waschmodul hat vorzugsweise einen eigenen Prozessor und ist über eine Signalleitung 52 mit einem Verschmutzungssensor 50 verbunden, der im Innenraum des Gehäuses 20 angeordnet ist. Das Waschmodul 47 ist über eine Steuerleitung 45 mit der Steuerung 16 verbunden. Die Steuerung 16 kann dem Waschmodul 47 der Wascheinrichtung 43 zum Beispiel in zeitlich definierten Abständen oder aufgrund manueller Anweisung z.B. über ein Bedienpanel der Steuerung 16 ein Signal zum Starten eines Reinigungszyklus übermitteln, worauf das Waschmodul 47 einen Reinigungsvorgang startet. Dieser kann bei laufendem Betrieb der Trennvorrichtung durchgeführt werden. In dem Reinigungszyklus kann das Waschmodul alternierend die drei Eingänge 54, 56, 58 mit der Zuleitung 60 für die Sprühdüsen 44 verbinden und damit für eine effektive Reinigung des Gehäuseinnenraums sorgen. Am Ende können die Sprühdüsen mit dem Heißlufteingang 62 verbunden werden, um den Reinigungsvorgang durch einen Trockenvorgang abzuschließen. Das Reinigungsprogramm kann auch eine Abfolge von Wasserstrahl-, Dampf- und Detergenzienbenutzung umfassen. Die Programme können entweder in der Steuerung 16 oder in dem Waschmodul 47 abgelegt sein. Das Waschmodul 47 kann die Daten des Verschmutzungssensors über das Waschmodul 47 oder alternativ auch direkt erhalten, insbesondere wenn ein Waschvorgang durch die Steuerung 16 initiiert wird.

Die Reinigung kann geschehen, sowohl wenn sich das Leitrohr 34 im Gehäuse 20 befindet, also bei geschlossenem Gehäuse, als auch bei geschlossenem Gehäuse 20, wenn das Leitrohr 34 vorher entnommen wurde.

Der Innenraum des Gehäuses 20 der Materialweiche 18 kann während des Betrieb der Trennvorrichtung 10 vollautomatisch gereinigt werden. Bei dieser Reinigung kann auch vorgesehen sein, dass die Sprühdüsen 44 betätigt werden, wenn sich das Leitrohr 34 in beiden möglichen Schwenkstellungen befindet, um so eine möglichst effiziente Reinigung zu gewährleisten.

Die Erfindung ist nicht auf das obige Ausführungsbeispiel beschränkt, sondern kann innerhalb des Schutzbereichs der beigefügten Patentansprüche beliebig modifiziert werden.

### Bezugszeichenliste:

- 10: Trennvorrichtung - Metallabscheider
- 12: Fallrohr - Förderstrecke
- 14: Detektionseinrichtung
- 15: Gehäuse der Detektionseinrichtung
- 16: Steuerung der Trennvorrichtung
- 18: Materialweiche
- 20: quaderförmiges Gehäuse der Materialweiche
- 22: Einlass der Materialweiche
- 24: erster Auslass der Materialweiche
- 26: zweiter Auslass der Materialweiche
- 28: Trennrippe
- 30: erste Lagerbuchse in der hinteren Gehäusewand
- 32: zweite Lagerbuchse in der Tür
- 34: Leitrohr - Leitelement
- 36a,b: Lagerzapfen am Leitrohr
- 38: Rückwand des Gehäuses der Materialweiche
- 40: Tür des Gehäuses der Materialweiche
- 42: Schwenkantrieb
- 43: Wascheinrichtung
- 44: Reinigungselement - Sprühdüse der Wascheinrichtung im Innenraum des Gehäuses
- 45: Steuerleitung zwischen Steuerung und Waschmodul
- 46: Greifbügel der Tür
- 47: Waschmodul
- 48: Innenecken des Gehäuses
- 50: Verschmutzungssensor
- 52: Signalleitung zwischen Verschmutzungssensor und Waschmodul (oder Steuerung)
- 54: erster Eingang des Waschmoduls für eine Wasserhochdruckquelle
- 56: zweiter Eingang des Waschmoduls für Wasserdampf
- 58: dritter Eingang des Waschmoduls für Waschdetergenzien
- 60: Zuleitung für die Sprühdüsen
- 62: vierter Eingang des Waschmoduls für Heißluft

## Patentansprüche

1. Materialweiche (18) zum Separieren von Schüttgut, mit einem Gehäuse (20), welches einen Einlass (22) und wenigstens zwei Auslässen (24, 26) als auch wenigstens ein zwischen dem Einlass (22) und den Auslässen (24, 26) mittels eines Schwenklagers (30, 32, 36a, 36b) schwenkbar angeordnetes Leitelement (34) aufweist, um den Materialstrom wahlweise einem der Auslässe (24, 26) zuzuführen, welche Materialweiche (18) einen Schwenkantrieb (42) zum Schwenken des Leitelements (34) aufweist, um dieses fluchtend zwischen dem Einlass (22) und jeweils einem der mehreren Auslässe (24, 26) auszurichten,
**dadurch gekennzeichnet, dass** in dem Gehäuse (20) zwischen dem Leitelement (34) und der Gehäuseinnenwand (38) wenigstens ein Reinigungselement (44) einer Wascheinrichtung (43) angeordnet ist.

2. Materialweiche (18) nach Anspruch 1, **dadurch gekennzeichnet, dass** das Reinigungselement durch wenigstens eine Sprühdüse (44) gebildet ist.

3. Materialweiche nach Anspruch 2, **dadurch gekennzeichnet, dass** die wenigstens eine Sprühdüse (44) in den Innenecken (48) des Gehäuses (20) angeordnet ist.

4. Materialweiche (18) nach einem der vorhergehenden Ansprüche, **dadurch gekennzeichnet, dass** in dem Gehäuse ein Verschmutzungssensor (50) angeordnet ist.

5. Materialweiche (18) nach einem der vorhergehenden Ansprüche, **dadurch gekennzeichnet, dass** das Gehäuse (20) eine Tür (40) aufweist, die an dem Gehäuse (20) bewegbar oder abnehmbar gehalten ist.

6. Materialweiche nach Anspruch 5, **dadurch gekennzeichnet, dass** ein erstes Lagerelement (30) des Schwenklagers (30, 32, 36a, 36b) an dem Gehäuse (20) angeordnet ist und ein zweites Lagerelement (32) des Schwenklagers (30, 32, 36a, 36b) an der Tür (40), und dass das Leitelement (34) abnehmbar in dem ersten und /oder zweiten Lagerelement (30, 32) aufgenommen ist, und dass die gehäuse- und türseitigen ersten und zweiten Lagerelemente durch Lagerbuchsen (30, 32) gebildet sind und am Leitelement (34) Wellenzapfen (36a, 36b) ausgebildet sind, welche sich in die beide Lagerbuchsen (30, 32) hinein erstrecken.

7. Materialweiche (18) nach einem der vorhergehenden Ansprüche, **dadurch gekennzeichnet, dass** der Schwenkantrieb (42) außenseitig mit dem Gehäuse (20) der Materialweiche (18) verbunden ist.

8. Materialweiche (18) nach einem der vorhergehenden Ansprüche, **dadurch gekennzeichnet, dass** das Leitelement als Leitrohr (34) ausgebildet ist.

9. Materialweiche (18) nach einem der vorhergehenden Ansprüche, **dadurch gekennzeichnet, dass** die Steuerung konzipiert ist, das Leitelement während eines Reinigungsvorgangs hin- und her zu schwenken.

10. Materialweiche (18) nach einem der vorhergehenden Ansprüche, **dadurch gekennzeichnet, dass** die Wascheinrichtung (43) ein Waschmodul (47) umfasst, welches konzipiert ist, das wenigstens eine Reinigungselement (44) wahlweise mit einer Druckwasserquelle und/oder einer Dampfquelle und/oder mit einer Detergenzienzugabe und/oder mit einer Heißluftzufuhr zu verbinden.

11. Trennvorrichtung (10) für Schüttgüter, umfassend eine Materialzufuhr, eine Förderstrecke (12) für Schüttgüter, welche Trennvorrichtung (10) eine Detektionseinrichtung (14) und eine Steuerung (16) aufweist, um wenigstens zwei in dem Schüttgut enthaltene Materialsorten zu trennen, wobei die Steuerung (16) konzipiert ist, in Abhängigkeit von einem Signal der Detektionseinrichtung (14) den Schwenkantrieb (42) einer Materialweiche (18) nach einem der vorhergehenden Ansprüche zu betätigen, um mittels der Betätigung des Leitelements (34) ein Materialteil von einem Einlass (22) der Materialweiche (18) in einen von mehreren Auslässen (24, 26) der Materialweiche (18) zu leiten,
**dadurch gekennzeichnet, dass** die Trennvorrichtung (10) eine Wascheinrichtung (43) aufweist, welche wenigstens ein Reinigungselement (44) im Innenraum des Gehäuses (20) aufweist, welche Wascheinrichtung (43) konzipiert ist, einen Reinigungsvorgang im Gehäuse (20) durch Betätigung des Reinigungselements (44) durchzuführen.

12. Trennvorrichtung nach Anspruch 11, **dadurch gekennzeichnet, dass** die Wascheinrichtung (43) mit der Steuerung (16) verbunden und konzipiert ist, das Reinigungselement (44) mit einer Druckwasserquelle und/oder einer Dampfquelle und/oder einer Detergenzienzugabe zu verbinden.

13. Trennvorrichtung nach Anspruch 12, **dadurch gekennzeichnet, dass** im Gehäuse (20) der Materialweiche (18) ein Verschmutzungssensor (50) angeordnet ist, der mit der Steuerung (16) und/oder der Wascheinrichtung (43) verbunden ist, und dass die Steuerung(16)/Wascheinrichtung (43) konzipiert ist, das Signal des Verschmutzungssensors (50) mit einem Referenzwert zu vergleichen und in Abhängigkeit von dem Vergleichsergebnis ein Wartungssignal für die Steuerung und/oder eine Bedienperson abzugeben.

14. Trennvorrichtung nach Anspruch 13, **dadurch gekennzeichnet, dass** die Steuerung (16)/Wascheinrichtung (43) konzipiert ist, die Parameter eines Reinigungsvorgangs in Abhängigkeit von dem Vergleichsergebnis einzustellen.

15. Trennvorrichtung nach einem der Ansprüche 11 bis 14, **dadurch gekennzeichnet, dass** die Wascheinrichtung (43) ein Wachmodul (47) insbesondere mit einem eigenen Prozessor aufweist, welches Waschmodul einen ersten Eingang (54) für eine Wasserhochdruckquelle und/oder einen zweiten Eingang (56) für Wasserdampf und/oder einen dritten Eingang (58) für Waschdetergenzien und/oder einen vierten Eingang für Heißluft aufweist und konzipiert ist, in Abhängigkeit von einem Steuersignal der Steuerung (16) oder von einem internen Steuersignal wenigsten einen der Eingänge (54, 56, 58) mit einer Zuleitung (60) für das Reinigungselement (44) zu verbinden.
